# EUROPÄISCHE PATENTANMELDUNG

(11) **EP 4 600 378 A1**
(43) Veröffentlichungstag der Anmeldung: **13.08.2025**
(21) Anmeldenummer: 24156665.2
(22) Anmeldetag: 08.02.2024
(51) Int. Cl.: C21B 5/00, F27B 1/26, G05B 13/02

(54) **CHARAKTERISIERUNG EINES VERHÜTTUNGSPROZESSES**

(71) Anmelder: Primetals Technologies Austria GmbH, 4031 Linz (AT); Voestalpine Stahl GmbH, 4020 Linz (AT)
(72) Erfinder: Staudinger, Clemens, Linz (AT); Tauber, Christian, Wien (AT); Bettinger, Dieter, Plesching (AT); Feilmayr, Christoph, Linz (AT); Krahwinkler, Petra, St. Marien (AT); Lumetzberger, Wolfgang, Langenstein (AT); Schaler, Martin, Linz (AT); Schuster, Stefan, Enns (AT)
(74) Vertreter: Metals@Linz

(57) **Zusammenfassung**

Die vorliegende Erfindung betrifft ein Verfahren (100) und ein System (10) zur Charakterisierung eines Verhüttungsprozesses in einem Hochofen (3), eine Verhüttungsanlage (1) sowie Verfahren (200; 300) zum maschinellen Erlernen von Modellen (16; 24), die in einem solchen Verfahren (100) und System (10) einsetzbar sind. Dabei werden für den im Hochofen (3) gegenwärtig ablaufenden Verhüttungsprozess Parameterwerte (A, B, C, D, E) einer vorbestimmten Anzahl verschiedener Prozessparameter ermittelt (S1). Vorzugsweise bildet dabei zumindest einer der Prozessparameter eine Durchgasung des Hochofens (3) ab. Ein maschinell erlerntes Modell (16) ordnet auf Grundlage der ermittelten Parameterwerte (A, B, C, D, E) einen durch die Parameterwerte (A, B, C, D, E) definierten Hochofen-Betriebszustand (30) einer Betriebskategorie (X, Y, Z) zu (S2).

## Beschreibung

### Gebiet der Technik

Die vorliegende Erfindung betrifft ein Verfahren und ein System zur Charakterisierung eines Verhüttungsprozesses in einem Hochofen, eine Verhüttungsanlage sowie Verfahren zum maschinellen Erlernen von Modellen, die in einem solchen Verfahren und System einsetzbar sind.

### Stand der Technik

Prozesse in Verhüttungsanlagen, insbesondere in Hochöfen ablaufende metallurgische Vorgänge, werden üblicherweise streng überwacht. Zur Automatisierung und Qualitätssicherung kann dabei eine Vielzahl von verschiedenen Sensoren zum Einsatz kommen. Mithilfe dieser Sensoren lässt sich eine Vielzahl verschiedener Prozessparameter erfassen, welche grundsätzlich Aussagen und/oder Vorhersagen z. B. über Reaktionsverläufe und -geschwindigkeiten erlauben.

Die Auswertung dieser Parameterwerte ist jedoch sehr aufwändig und zeitintensiv, da es im Allgemeinen nicht ausreicht, einzelne Prozessparameter zu betrachten und damit z. B. Fehlerquellen auszumachen. Vielmehr muss für gewöhnlich immer um eine Kombination aus einer Vielzahl an Prozessparametern berücksichtig werden. Daher werden unerwünschte Prozessverläufe oftmals erst spät erkannt. Zudem ist es oft auch nicht, oder nur mit viel Aufwand und/oder Erfahrung möglich, die Ursache für den unerwünschten Prozessverlauf rein aus der Vielzahl an Parameterwerten zu ermitteln und entsprechende Gegenmaßnahmen einzuleiten.

### Zusammenfassung der Erfindung

Vor diesem Hintergrund ist es eine Aufgabe der vorliegenden Erfindung, die Charakterisierung von Verhüttungsprozessen in einem Hochofen weiter zu verbessern, insbesondere zu vereinfachen und zu beschleunigen.

Diese Aufgabe wird gelöst durch ein Verfahren und ein System zur Charakterisierung eines Verhüttungsprozesses sowie einer Verhüttungsanlage gemäß den unabhängigen Ansprüchen.

Eine weitere Aufgabe ist es, Verfahren anzugeben, mit denen Modelle, die zur verbesserten Charakterisierung eines Verhüttungsprozesses genutzt werden können, maschinell erlernbar sind.

Diese Aufgabe wird gelöst durch Verfahren zum maschinellen Erlernen von Modellen, die in einem hier beschriebenen Verfahren und System einsetzbar sind, gemäß den unabhängigen Ansprüchen.

Bevorzugte Ausführungsformen sind Gegenstand der abhängigen Ansprüche und der folgenden Beschreibung.

Bei einem Verfahren zur Charakterisierung eines Verhüttungsprozesses in einem Hochofen, gemäß einem ersten Aspekt der Erfindung, werden für einen in einem Hochofen gegenwärtig ablaufenden Verhüttungsprozess Parameterwerte einer vorbestimmten Anzahl verschiedener Prozessparameter ermittelt. Vorzugsweise bildet dabei zumindest einer der Prozessparameter eine Durchgasung des Hochofens ab. Ein maschinell erlerntes Modell ordnet auf Grundlage der ermittelten Parameterwerte dann einen durch die Parameterwerte definierten Hochofen-Betriebszustand einer Betriebskategorie zu.

Ein maschinell erlerntes Modell im Sinne der Erfindung ist vorzugsweise ein von einem oder mehreren Algorithmen auf Grundlage von Trainingsdaten erzeugtes statistisches Modell. Das maschinell erlernte Modell kann insofern auch als trainiertes Modell bezeichnet werden. Das maschinell erlernte Modell ist zweckmäßigerweise das Ergebnis von maschinellem Lernen. Ein derart maschinell erlerntes Modell kann gemeinhin auch als künstliche Intelligenz bezeichnet werden, welche Muster und Gesetzmäßigkeiten in den Trainingsdaten erkannt hat und damit auch unbekannte Daten gemäß dieser Muster und Gesetzmäßigkeiten beurteilen oder auswerten kann. Das maschinell erlernte Modell kann beispielsweise auf einem neuronalen Netz (neural network) oder einem Zufallswald (random forest) beruhen.

Ein Aspekt der Erfindung beruht auf dem Ansatz, einen Betriebszustand eines Hochofens bzw. des darin ablaufenden Verhüttungsprozesses mittels einer künstlichen Intelligenz zu beurteilen. Dieser Beurteilung wird zweckmäßigerweise eine begrenzte, zum Beispiel einstellige, Anzahl an Prozessparametern zugrunde gelegt. Anhand von aktuellen Parameterwerten dieser auch als Prozessvariablen bezeichneten Prozessparameter kann die künstliche Intelligenz den gegenwärtigen Hochofen-Betriebszustand einer von mehreren Betriebskategorien zuordnen. Beispielsweise kann der Hochofen-Betriebszustand den Kategorien "gut", "neutral" oder "schlecht" zugeordnet werden. Denkbar sind grundsätzlich aber auch noch weitere Kategorien. Damit kann insbesondere zeitnah erkannt werden, wenn sich der Verhüttungsprozess verschlechtert bzw. der Hochofen-Betriebszustand in einen schlechteren Zustand übergeht. Infolgedessen lässt sich entsprechend auch zeitnah auf diese Verschlechterung reagieren, was Ressourcen, insbesondere Energie, einspart. Beispielsweise können Einsatzstoffe verbesserter Qualität verwendet werden, oder das Begichtungsschema, z. B. die räumliche Verteilung der Einsatzstoffe, kann geändert werden. Zudem muss eine Vielzahl von Prozessparametern nicht mehr manuell von erfahrenem Bedienpersonal überwacht und ausgewertet werden, was Aufwand und Kosten weiter senken kann.

Die künstliche Intelligenz wird zweckmäßigerweise von einem entsprechend trainierten Modell repräsentiert, welches auch als maschinell erlerntes Modell bezeichnet wird. Das maschinell erlernte Modell ist vorzugsweise dahingehend trainiert, dass die Kategorisierung des Hochofen-Betriebszustands auf Grundlage von aktuellen Parameterwerten der vorbestimmten Anzahl an (wenigen) Prozessparametern erfolgen kann. Der Hochofen-Betriebszustand kann so effektiv und gegebenenfalls auch ohne tiefergehende Vorkenntnisse des Bedienpersonals, insbesondere auch automatisiert und/oder kontinuierlich, eingeschätzt werden.

Beispielsweise kann das maschinell erlernte Modell zur Zuordnung des Hochofen-Betriebszustands zur Betriebskategorie ein Maß für die Güte des Verhüttungsprozesses ausgeben. Die den Hochofen-Betriebszustand charakterisierenden Parameterwerte können so mittels des maschinell erlernten Modells effektiv und automatisch zu einer leicht zu interpretierenden Kennzahl zusammengefasst werden, die auch für unerfahrenes Bedienpersonal Aussagekraft hat.

Es hat sich gezeigt, dass die Kategorisierung des Hochofen-Betriebszustands mittels des maschinell erlernten Modells besonders zuverlässig erfolgen kann, wenn unter anderem eine Kennzahl für die Durchgasung des Hochofens als Eingangsgröße berücksichtigt wird. Eine inhomogene Durchgasung kann auf eine drohende Verstopfung, Kanalbildung bzw. instabile Möllerbewegung hinweisen und insofern mit einem schlechten Hochofen-Betriebszustand assoziiert werden, der mit erhöhtem Energieverbrauch einhergeht. Infolgedessen kann die Durchgasung einen sensiblen und universellen Prozessparameter zur Beurteilung des Hochofen-Betriebszustands darstellen.

Ein solcher Parameterwert bzw. eine solche Kennzahl für die Durchgasung kann durch einen Druckverlauf im Hochofen gegeben sein. Zweckmäßigerweise wird die Durchgasung durch das Verhältnis eines Druckabfalls in einem unteren Bereich zu einem Druckabfall im oberen Bereich des Hochofens, insbesondere des Schachts, abgebildet. Das Verhältnis der Druckabfälle liegt typischerweise im Bereich 2-16. Ist der Quotient aus dem Druckabfall im unteren Bereich und dem Druckabfall im oberen Bereich hoch, z. B. im Bereich 8-16, kann dies auf eine stabile Durchgasung der Möllersäule und einen guten Hochofen-Betriebszustand hindeuten. Demgegenüber kann ein geringer Quotient, z. B. im Bereich 2-8, auf eine instabile Durchgasung der Möllersäule und einen schlechten Hochofen-Betriebszustand hinweisen. Die Wertebereiche für eine gute bzw. schlechte Durchgasung können dabei auch von den Parameterwerten der anderen Prozessparameter abhängig sein.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

Es hat sich gezeigt, dass zur zuverlässigen Beurteilung des Hochofen-Betriebszustands bzw. des Verhüttungsprozesses nicht zwingend eine Vielzahl von Prozessparametern berücksichtigt werden muss. Vielmehr kann eine zuverlässige und gleichzeitig schnelle Kategorisierung des Zustands auch dann erfolgen, wenn lediglich Parameterwerte von zehn oder weniger, vorzugsweise fünf oder weniger, gegebenenfalls sogar lediglich vier, Prozessparametern ermittelt und der Zuordnung des Hochofen-Betriebszustands zu einer Betriebskategorie zugrunde gelegt werden. Dies kann nicht nur Vorteile im Hinblick auf die benötigte Infrastruktur bzw. Hardware haben (z.B. reduzierte Anzahl an Sensoren am Hochofen zur Ermittlung der Parameterwerte), sondern auch im Hinblick auf das maschinelle Erlernen des Modells. Insbesondere lässt sich so die Größe eines Trainingsdatensatzes signifikant verringern und das Modelltraining beschleunigen.

Neben dem bereits angesprochenen Parameter- oder Kennwert, der eine Durchgasung des Hochofens abbildet (z. B. ein Verhältnis der Differenzdrücke über unterschiedliche Hochofenbereiche), wird vorzugsweise jeweils i) ein Parameterwert für eine Kühlleistung am Hochofen, ii) ein Parameterwert, der eine Kohlenmonoxid-Ausnutzung abbildet, und/oder iii) ein Parameterwert für einen Reduktionsmittelverbrauch ermittelt und der Zuordnung des Hochofen-Betriebszustands zu einer Betriebskategorie zugrunde gelegt. In einer Vielzahl von Versuchen hat sich gezeigt, dass diese Prozessparameter ausreichend unabhängig voneinander sind und somit den Hochofen-Betriebszustand bzw. den Verhüttungsprozess ausreichend breit charakterisieren können. Insofern ist mit diesen Prozessparametern bzw. Parameterwerten eine zuverlässige Kategorisierung des Hochofen-Betriebszustands möglich.

Die spezielle Kühlleistung am Hochofen, die auch als Schacht-Kühlleistung bezeichnet wird, also die pro Zeiteinheit aus dem Schacht des Hochofens abgeführte Wärmemenge, ergibt sich vorzugsweise aus der Temperatur und dem Volumenfluss eines Kühlmediums durch ein Kühlsystem des Hochofens (z. B. 8000-30000 kW). Eine hohe Kühlleistung kann ein Hinweis auf einen nicht optimal ablaufenden Verhüttungsprozess und damit auf einen schlechten Hochofen-Betriebszustand sein.

Die Kohlenmonoxid-Ausnutzung korrespondiert zweckmäßigerweise mit einer Rate, mit der Eisenoxid mit beim Verhüttungsprozess gebildetem Kohlenmonoxid reagiert und letztlich das als Einsatzstoff eingesetzte Eisenerz reduziert wird (z. B. 44-52%). Ein Rückschluss auf die Kohlenmonoxid-Ausnutzung kann sich beispielsweise aus dem Kohlenmonoxid-Anteil im Gichtgas ergeben. Ein hoher Kohlenmonoxid-Anteil kann auf einen schlechten Hochofen-Betriebszustand hinweisen. Ein geringer Kohlenmonoxid-Anteil kann dagegen auf einen guten Hochofen-Betriebszustand hindeuten, insbesondere in Kombination mit entsprechenden Parameterwerten anderer Prozessparameter.

Der Reduktionsmittelverbrauch (Summe aus Koks und Ersatzreduktionsmittel) lässt sich als Indiz für die Effizienz der beim Verhüttungsprozess ablaufenden Reduktion des Eisenerzes verstehen (z. B. 460-510 kg pro t Roheisen). Insofern deutet ein hoher Reduktionsmittelverbrauch auf einen schlechten (weil ineffizienten) Hochofen-Betriebszustand hin.

Gegebenenfalls können zusätzlich oder alternativ auch andere Prozessparameter berücksichtigt werden, z. B. die Standardabweichung der Teufe (d. h. der Höhe der Möllersäule im Hochofen). Dadurch lässt sich die Robustheit der Kategorisierung durch das maschinell erlernte Modell in einigen Fällen zumindest geringfügig weiter steigern.

Grundsätzlich ist es möglich, auf Basis der vorbestimmten Anzahl an Prozessparametern bzw. der entsprechenden Parameterwerte, insbesondere eines Zeitverlaufs dieser Parameterwerte, eine Entwicklung des Hochofen-Betriebszustands bzw. des Verhüttungsprozesses abzuschätzen. Vorzugsweise wird hierzu mittels wenigstens eines weiteren maschinell erlernten Modells der aktuelle Parameterwert wenigstens einer der Prozessparameter geschätzt. Diese Schätzung erfolgt zweckmäßigerweise auf Grundlage der aktuellen Parameterwerte der übrigen Prozessparameter. Beispielsweise kann ein Parameterwert, welcher die aktuelle Durchgasung des Hochofens abbildet, geschätzt werden anhand von aktuellen Parameterwerten für die Kühlleistung, den Druckabfall, die Kohlenmonoxid-Ausnutzung und/oder den Reduktionsmittelverbrauch. Auf Grundlage eines vom wenigstens einen weiteren maschinell erlernten Modell für diese Schätzung ausgegebenen Fehlers lässt sich dann prüfen, ob eine Störung des durch die aktuellen Parameterwerte definierten Hochofen-Betriebszustands vorliegt. Zweckmäßigerweise wird der Fehler dabei über einen vorbestimmten Zeitbereich berücksichtigt. Beispielsweise kann geprüft werden, ob der Fehler innerhalb dieses Zeitbereichs einen vorgegebenen Schwellenwert erreicht oder überschreitet. Ist dies der Fall, kann dies auf eine Störung des Verhüttungsprozesses hindeuten und das Bedienpersonal entsprechend informiert werden.

Ein vorbestimmter Zeitbereich ist in diesem Zusammenhang vorzugsweise maximal 4 bis 6 Stunden lang, besonders bevorzugt 2 bis 4 Stunden lang, insbesondere minimal 30 Minuten lang. Abhängig von der Länge des vorbestimmten Zeitbereichs können unterschiedliche Störungstypen identifiziert werden.

Erreicht oder überschreitet der vom weiteren maschinell erlernten Modell ausgegebene Fehler oder eine aus dem Fehler abgeleitete Kenngröße den Schwellenwert innerhalb des vorbestimmten Zeitbereichs nur kurzzeitig, d. h. innerhalb eines kurzen Zeitabschnitts von beispielsweise einigen Minuten, maximal 30 Minuten, kann es sich bei der Störung um eine sogenannte spontane Zustandsänderung (Punktanomalie) handeln. Der Schwellenwert kann daher auch als "spike limit" bezeichnet werden. Derartige spontane Zustandsänderungen werden beispielsweise detektiert, wenn ein Sensor defekt ist und entsprechend falsche Parameterwerte liefert. In diesem Sinne kann eine spontane Zustandsänderung eine virtuelle Zustandsänderung bzw. die damit assoziierte Störung des Hochofen-Betriebszustands eine virtuelle Störung sein. Andererseits kann eine derartige spontane Zustandsänderung auch durch eine zeitlich beschränkte Störung im Verhüttungsprozess wie etwa ein Stürzen der Möllersäule im Hochofenschacht verursacht werden. Welcher Typ von spontaner Zustandsänderung vorliegt, kann gegebenenfalls durch eine weitergehende Analyse der Prozessparameter, insbesondere der zeitlichen Entwicklung der übrigen Prozessparameter und/oder der übrigen von dem wenigstens einen maschinell erlernten Modell ausgegebenen Fehler, ermittelt werden.

Erreicht oder überschreitet der vom weiteren maschinell erlernten Modell ausgegebene Fehler oder die daraus abgeleitete Kenngröße den Schwellenwert innerhalb des vorbestimmten Zeitbereichs dagegen über einen längeren Zeitraum, d. h. innerhalb eines langen Zeitabschnitts von beispielsweise mehr als 1 Stunde, kann es sich bei der Störung um einen Zustandswechsel (d. h. einen Wechsel in einen anderen Betriebszustand) handeln. Solche Zustandswechsel können zum Beispiel aufgrund einer geänderten Fahrweise des Hochofens oder anderer Phänomene, wie etwa Ansatzbildung oder Hängen der Möllersäule, auftreten. Auch hier kann gegebenenfalls durch eine weitergehende Analyse der Prozessparameter, insbesondere der zeitlichen Entwicklung der übrigen Prozessparameter und/oder der übrigen von dem wenigstens einen weiteren maschinell erlernten Modell ausgegebenen Fehler, zusätzliche Information über den Zustandswechsel, insbesondere dessen Ursache, ermöglichen.

Besonders bevorzugt wird also nicht nur für einen Prozessparameter ein aktueller Parameterwert geschätzt und der dabei ermittelte Fehler (oder einer davon abgeleiteten Kenngröße) der Prüfung, ob eine Störung vorliegt, zugrunde gelegt. Vielmehr werden mittels einer entsprechenden Anzahl weiterer maschinell erlernter Modelle vorzugsweise die aktuellen Parameterwerte für jeden Prozessparameter geschätzt auf Grundlage aktueller Parameterwerte der jeweils übrigen Prozessparameter. Auf Grundlage der von den weiteren maschinell erlernten Modellen für diese Schätzungen ausgegebenen Fehler wird zweckmäßigerweise ein Gesamtfehler ermittelt, der einer Prüfung, ob eine Störung des von dem durch die Parameterwerte der Prozessparameter definierten Hochofen-Betriebszustand vorliegt, zugrunde gelegt wird. Zweckmäßigerweise wird dieser Gesamtfehler oder eine daraus abgeleitete Kenngröße, z. B. ein geglätteter Gesamtfehler, ebenfalls daraufhin überprüft, ob er einen vorgegebenen Schwellenwert erreicht oder überschreitet oder gegebenenfalls wie lange dieser Schwellenwert erreicht oder überschritten wird. Die Auswertung des Gesamtfehlers ermöglicht eine besonders zuverlässige Beurteilung des Hochofen-Betriebszustands bzw. dessen Entwicklung, insbesondere ob eine spontane Zustandsänderung oder ein Zustandswechsel vorliegt oder sich zumindest ankündigt.

Um die Ursache der Störung des Verhüttungsprozesses bzw. des Hochofen-Betriebszustands ermitteln zu können, werden vorzugsweise die einzelnen für die Schätzungen ermittelten Fehler und/oder der ermittelte Gesamtfehler betrachtet. Dies soll auch die Betrachtung daraus abgeleiteter Kenngrößen, etwa eines geglätteten Gesamtfehlers, umfassen.

Beispielsweise kann geprüft werden, für welche Prozessparameter die ermittelten Fehler zunehmen, zum Beispiel die entsprechenden Schwellenwerte erreichen oder überschreiten. Bevorzugt wird dabei auch die zeitliche Entwicklung, d. h. der zeitliche Verlauf, der Parameterwerte und/oder der entsprechenden Fehler ausgewertet. Wird beispielsweise mittels des maschinell erlernten Modells plötzlich ein schlechter oder jedenfalls ein nur neutraler Hochofen-Betriebszustand ermittelt, können diejenigen Prozessparameter, deren korrespondierender Fehler den entsprechenden Schwellenwert erreicht oder überschreitet, ein Hinweis auf die Ursache für den Zustandswechsel bzw. den nun schlechten oder nur noch neutralen Zustand liefern. Insbesondere kann auf dieser Grundlage, etwa durch erklärbare KI (explainable Al-Algorithmen), dem Bedienpersonal Hinweise darauf geben, welcher der Prozessparameter "auffällig" ist und damit hauptverantwortlich für einen "schlechten" Betriebszustand.

Gegebenenfalls ist es auch möglich, auf Grundlage des zeitlichen Verlaufs der Parameterwerte zumindest eines der Prozessparameter und eines parallelen zeitlichen Verlaufs der zugeordneten Betriebskategorien eine weitere Entwicklung des Hochofen-Betriebszustands abzuschätzen. Zu diesem Zweck kann beispielsweise eine Trajektorie des Hochofen-Betriebszustands ermittelt und visualisiert werden. Dies erlaubt es dem Bedienpersonal, frühzeitig Gegenmaßnahmen zu ergreifen und so den Wechsel in einen schlechten Betriebszustand gegebenenfalls abzuwenden. Es ist auch denkbar, den zeitlichen Verlauf der Parameterwerte und/oder der parallelen zugeordneten Betriebskategorie, insbesondere die Trajektorie, durch einen Algorithmus analysieren zu lassen und automatisch oder zumindest semi-automatisch einen Alarm ausgeben zu lassen, wenn der Algorithmus erkennt, dass sich der Verhüttungsprozess verschlechtert.

Das System zur Charakterisierung eines Verhüttungsprozesses in einem Hochofen, gemäß einem zweiten Aspekt der Erfindung, weist auf: i) eine Sensorvorrichtung für einen Hochofen, mit der bei einem im Hochofen ablaufenden Verhüttungsprozess Parameterwerte einer vorbestimmten Anzahl verschiedener Prozessparameter ermittelbar sind, wobei vorzugsweise zumindest einer der Prozessparameter eine Durchgasung des Hochofens abbildet; und ii) eine Kategorisierungsvorrichtung, die ein erstes maschinell erlerntes Modell aufweist und dazu eingerichtet ist, auf Grundlage der ermittelten Parameterwerte einen durch die Parameterwerte definierten Hochofen-Betriebszustand einer Betriebskategorie zuzuordnen, insbesondere mittels des maschinell erlernten Modells.

Mit einem solchen System kann der Hochofen-Betriebszustand effektiv und gegebenenfalls auch ohne tiefergehende Vorkenntnisse des Bedienpersonals eingeschätzt werden. Hierbei muss nicht mehr eine Vielzahl von Prozessparametern manuell und erfahrungsbasiert überwacht und ausgewertet werden, was Aufwand und Kosten senkt. Darüber hinaus kann gegebenenfalls auch zeitnah erkannt werden, ob sich der Verhüttungsprozess verschlechtert. Dadurch lässt sich entsprechend auch zeitnah auf diese Verschlechterung reagieren, was zum Betrieb des Hochofens eingesetzte Ressourcen, insbesondere Energie, einspart.

Zweckmäßigerweise weist die Sensorvorrichtung verschiedene Sensortypen auf, um die Parameterwerte der vorbestimmten Anzahl der Prozessparameter erfassen zu können. Zweckmäßigerweise entspricht die Anzahl der Sensortypen der vorbestimmten Anzahl an Prozessparametern. Pro Sensortyp können dabei ein oder mehrere Sensoren vorgesehen sein, um die Parameterwerte des entsprechenden Prozessparameters präzise und umfänglich, zum Beispiel ortsaufgelöst, erfassen zu können. Vorzugsweise ist entsprechend wenigstens ein Sensor zum Erfassen der Durchgasung des Hochofens, z. B. wenigstens ein Sensor zum Erfassen eines Druckabfalls im Hochofen, wenigstens ein Sensor zum Erfassen der Kühlleistung am Hochofen, wenigstens ein Sensor zum Erfassen einer Kohlenmonoxid-Ausnutzung und/oder wenigstens ein Sensor zum Erfassen eines Reduktionsmittelverbrauchs vorgesehen.

Die Kategorisierungsvorrichtung kann softwaretechnisch und gegebenenfalls zusätzlich, zumindest teilweise, hardwaretechnisch ausgebildet sein. Die Kategorisierungsvorrichtung kann insbesondere eine, vorzugsweise mit einem Speicher- und/oder Bussystem daten- bzw. signalverbundene, Verarbeitungseinheit aufweisen. Beispielsweise kann die Kategorisierungsvorrichtung eine Mikroprozessoreinheit (CPU) oder ein Modul einer solchen und/oder ein oder mehrere Programme oder Programmmodule aufweisen. Insbesondere kann das maschinell erlernte Modell ein Programm- bzw. Softwaremodul der Kategorisierungsvorrichtung bilden. Die Kategorisierungsvorrichtung kann dazu ausgebildet sein, Befehle, die als ein in einem Speichersystem abgelegtes Programm oder maschinell erlerntes Modell implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm bzw. das maschinell erlernte Modell kann derart beschaffen sein, dass es das hier beschriebenen Verfahren oder zumindest Teile davon verkörpert bzw. auszuführen imstande ist, sodass damit ein Verhüttungsprozess charakterisiert werden kann.

Die Anlage zur Verhüttung eines Einsatzstoffes, insbesondere eines Metallerzes, gemäß einem dritten Aspekt der Erfindung, weist einen Hochofen und ein System zur Charakterisierung eines Verhüttungsprozesses gemäß dem zweiten Aspekt der Erfindung auf. Dabei ist die Sensorvorrichtung des Systems im Bereich des Hochofens angeordnet. Beispielsweise kann die Sensorvorrichtung, insbesondere wenigstens ein Sensor der Sensorvorrichtung, in und/oder am Hochofen angeordnet und dazu eingerichtet sein, für im und/oder am Hochofen ablaufende Subprozesse des Verhüttungsprozesses - wie zum Beispiel die Reduktion von Bestandteilen des Möllers, die Durchgasung des Möllers, das Abführen von Wärmeenergie, ein sich ergebender Druckabfall im Hochofenschacht und/oder dergleichen - charakteristische Prozessparameter zu ermitteln. In diesem Sinne kann unter einer Sensorvorrichtung bzw. einem Sensor auch eine Schnittstelle verstanden werden, über die auf entsprechende Parameterwerte zugegriffen werden kann. Beispielsweise können Parameterwerte wie die gegenwärtige Kühlleistung des Hochofens und/oder ein gegenwärtiger Reduktionsmittelverbrauch von einer Anlagen- bzw. Hochofensteuerung, z. B. über eine Schnittstelle, bereitgestellt werden. Dadurch können insbesondere prozesskritische Prozessparameter unmittelbar und besonders zuverlässig ermittelt werden.

Gemäß einem vierten Aspekt der Erfindung werden beim Verfahren zum maschinellen Erlernen eines Modells, welches in einem Verfahren gemäß dem ersten Aspekt der Erfindung einsetzbar ist, i) Parameterwerte einer vorbestimmten Anzahl verschiedener Prozessparameter bereitgestellt, die bei einem in einem Hochofen ablaufenden Verhüttungsprozess über einen vorbestimmten Zeitraum ermittelt wurden, wobei vorzugsweise zumindest einer der Prozessparameter eine Durchgasung des Hochofens abbildet, ii) jeweils durch einen Satz an Parameterwerten der Prozessparameter definierte Hochofen-Betriebszustände zu verschiedenen Zeitpunkten innerhalb des vorbestimmten Zeitraums einer Betriebskategorie zugeordnet und iii) mittels eines Algorithmus auf Grundlage der die Hochofen-Betriebszustände definierenden Parameterwerte und der jeweils zugeordneten Betriebskategorien ein Modell maschinell erlernt.

Mittels eines solchen maschinell erlernten Modells kann ein aktuell vorliegender Hochofen-Betriebszustand schnell und zuverlässig einer Betriebskategorie zugeordnet werden. Dabei ist es nicht notwendig, dass auf eine große, z. B. zweistellige, Anzahl an verschiedenen Prozessparametern zurückgegriffen wird. Vielmehr ist bereits eine geringe Anzahl an Prozessparametern, zum Beispiel fünf oder sogar nur vier Prozessparameter, ausreichend, um eine robuste Kategorisierung eines aktuellen Hochofen-Betriebszustands vornehmen zu können.

Ein vorbestimmter Zeitraum im Sinne der Erfindung ist vorzugsweise ein Zeitraum von wenigstens zwei Jahren, insbesondere im Wesentlichen drei Jahren. Innerhalb dieses Zeitraums durchläuft ein Hochofen üblicherweise eine ausreichende Anzahl an verschiedenen Betriebszuständen, die ein robustes Training des Modells erlauben.

Um eine robuste Arbeitsweise mit reproduzierbaren Ergebnissen des maschinell erlernten Modells zu ermöglichen, werden zweckmäßigerweise die für Hochofen-Betriebszustände relevantesten Prozessparameter und/oder Zeitbereiche vor dem Hintergrund prozesstechnischer Erfahrung, also zum Beispiel durch erfahrenes Bedienpersonal, ausgewählt. Die Parameterwerte dieser ausgewählten Prozessparameter können beispielsweise einer Datenbank entnommen werden, in der Betriebsdaten des Hochofens aus der Vergangenheit gespeichert sind.

In Versuchen hat sich gezeigt, dass die relevantesten Prozessparameter die Durchgasung des Hochofens, die Kühlleistung am Hochofen, den Druckabfall im Hochofen, die Kohlenmonoxid-Ausnutzung im Hochofen und/oder den Reduktionsmittelverbrauch abbilden.

Zweckmäßigerweise erfolgt die Zuordnung jeweils eines Satzes an Parameterwerten der Prozessparameter bzw. des dadurch definierten Hochofen-Betriebszustands zu einer Prozesskategorie manuell durch erfahrenes Betriebspersonal. So kann beispielsweise für eine Vielzahl an Zeitpunkten der jeweilige Hochofen-Betriebszustand einem von drei Zuständen, nämlich "gut", "neutral" oder "schlecht", zugeordnet werden. Anschließend kann der so erzeugte Datensatz von einer künstlichen Intelligenz analysiert, d. h. mit diesem so erzeugten Datensatz das Modell maschinell erlernt, werden.

Gemäß einem fünften Aspekt der Erfindung werden beim Verfahren zum maschinellen Erlernen eines weiteren Modells, welches in einem Verfahren gemäß dem ersten Aspekt der Erfindung einsetzbar ist, i) Parameterwerte einer vorbestimmten Anzahl verschiedener Prozessparameter bereitgestellt, die bei einem in einem Hochofen ablaufenden Verhüttungsprozess über einen vorbestimmten Zeitraum ermittelt wurden, wobei vorzugsweise zumindest einer der Prozessparameter eine Durchgasung des Hochofens abbildet, und ii) mittels eines Algorithmus auf Grundlage von Parameterwerten der Prozessparameter aus mehreren vorbestimmten Prozessabschnitten ein weiteres Modell maschinell erlernt, mit dem zumindest für einen Prozessparameter ein aktueller Parameterwert schätzbar ist auf Grundlage der aktuellen Parameterwerte der übrigen Prozessparameter.

Ein vorbestimmter Prozessabschnitt im Sinne der Erfindung ist vorzugsweise ein vorbestimmter Zeitbereich oder durch den vorbestimmten Zeitbereich, also eine vorbestimmte Zeitdauer, definiert.

Mittels eines solchen weiteren maschinell erlernten Modells kann ausgehend von aktuellen Parameterwerten verschiedener Prozessparameter der aktuelle Parameterwert eines zusätzlichen Prozessparameters zuverlässig geschätzt werden. Dabei ist es nicht notwendig, dass auf eine große Anzahl an verschiedenen Prozessparametern zurückgegriffen wird. Vielmehr sind bereits aktuelle Parameterwerte einer geringen Anzahl an Prozessparametern, zum Beispiel vier oder sogar nur drei Prozessparameter, ausreichend, um eine robuste Schätzung des Parameterwerts des weiteren Prozessparameters zu ermöglichen.

Auch hier werden zweckmäßigerweise Prozessparameter und Zeitbereiche, in denen die Parameterwerte der ausgewählten Prozessparameter berücksichtigt werden, auf Grundlage prozesstechnischer Erfahrung, also zum Beispiel durch erfahrenes Bedienpersonal, ausgewählt. Die mit dieser Auswahl korrespondierenden speziellen Hochofen-Betriebszustände können als Trainingsdaten für ein oder mehrere weitere Modelle dienen. Indem insbesondere solche Zeitbereiche - also entsprechende Prozessabschnitte des Verhüttungsprozesses - ausgewählt werden, in denen verschiedene Hochofen-Betriebszustände auftreten, lassen sich dem Modell oder den Modellen insbesondere das Erkennen von Abweichungen von einem aktuellen Hochofen-Betriebszustand und/oder Wechsel in einen anderen Betriebszustand, d. h. eine andere Betriebskategorie, antrainieren. Als Indiz für derartige Abweichungen oder Betriebszustandswechsel kann dabei insbesondere auch der vom trainierten Modell ausgegebene Fehler herangezogen werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: ein Beispiel einer Anlage zur Verhüttung eines Einsatzstoffs;
- FIG 2: ein Beispiel eines Verfahrens zur Charakterisierung eines Verhüttungsprozesses;
- FIG 3: ein Beispiel einer Trajektorie eines Hochofenzustands;
- FIG 4: ein Beispiel eines zeitlichen Verlaufs eines bei der Abschätzung von aktuellen Parameterwerten ermittelten Gesamtfehlers;
- FIG 5: ein Beispiel eines Verfahrens zum maschinellen Erlernen eines Modells; und
- FIG 6: ein Beispiel eines Verfahrens zum maschinellen Erlernen eines weiteren Modells.

Soweit zweckdienlich, werden in den Figuren dieselben Bezugszeichen für dieselben oder einander entsprechende Elemente der Erfindung verwendet.

### Beschreibung der Ausführungsformen

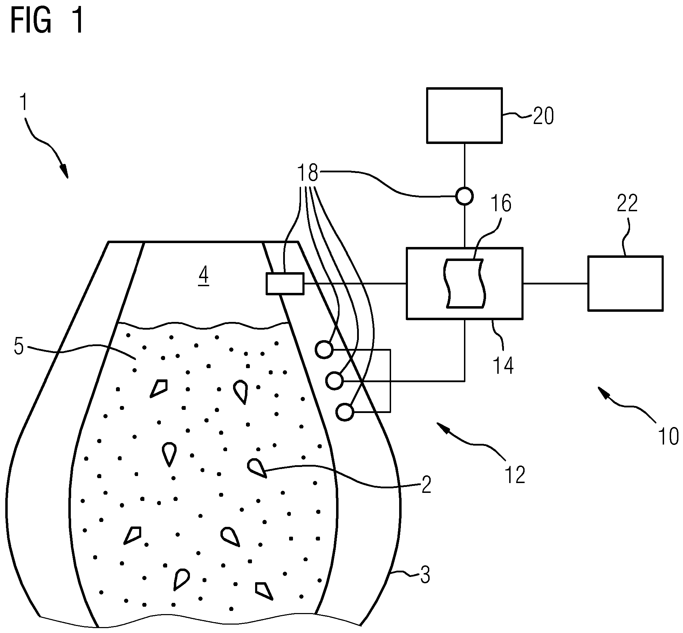

FIG 1 zeigt ein Beispiel einer Anlage 1 zur Verhüttung eines Einsatzstoffs 2, insbesondere eines Metallerzes. Die Anlage 1 weist einen Hochofen 3 auf, der mit dem Einsatzstoff 2, einem Reduktionsmittel, etwa Koks, und gegebenenfalls Zuschlagsstoffen beschickbar ist. In einem Schacht 4 des Hochofens 3 bilden der Einsatzstoff 2, das Reduktionsmittel und gegebenenfalls die Zuschlagsstoffe einen auch als Schüttung 5 bezeichneten Möller.

Die Anlage 1 weist zudem ein System 10 zur Charakterisierung eines im Hochofen 3 ablaufenden Verhüttungsprozesses auf, welches eine Sensorvorrichtung 12 und eine Kategorisierungsvorrichtung 14 mit einem maschinell erlernten Modell 16 umfasst. Die Sensorvorrichtung 12 ist im Bereich des Hochofens 3, insbesondere im und/oder am Hochofen 3, angeordnet und umfasst mehrere Sensoren 18, um Parameterwerte einer vorbestimmten Anzahl an Prozessparametern zu ermitteln. Die Sensoren 18 können dabei unterschiedliche Sensortypen repräsentieren, mit denen zum Beispiel i) eine Durchgasung der Schüttung 5, ii) ein Druckabfall im Schacht 4, iii) eine Kohlenmonoxid-Ausnutzung bei der Reduktion des Einsatzstoffs 2 in der Schüttung 5, iv) die aus dem Schacht 4 abtransportierte Wärmemenge pro Zeit und/oder v) ein Reduktionsmittelverbrauch erfasst werden kann. Alternativ oder zusätzlich kann die Sensorvorrichtung 12 zu diesem Zweck auch eine als Sensor 18 aufzufassende Schnittstelle aufweisen, über welche Parameterwerte für derartige Prozessparameter zum Beispiel von einer Anlagensteuerung 20 abrufbar sind.

Die Kategorisierungsvorrichtung 14 ist dazu eingerichtet, auf Grundlage der ermittelten Parameterwerte einen durch die Parameterwerte definierten Hochofen-Betriebszustand einer von mehreren Betriebskategorien zuzuordnen. Zu diesem Zweck können die ermittelten Parameterwerte beispielsweise dem maschinell erlernten Modell 16 als Eingangswerte zugeführt werden. Anders gesagt kann das maschinell erlernte Modell 16 die ermittelten Parameterwerte auswerten, um den Hochofen-Betriebszustand zu ermitteln und einer Betriebskategorie zuzuordnen. Das Ergebnis dieser Zuordnung, zum Beispiel eine die Betriebskategorie charakterisierende Kennziffer, kann zweckmäßigerweise über eine Ausgabeschnittstelle 22, etwa einen Bildschirm, einen Datenbus, einen Drucker und/oder dergleichen, ausgegeben werden.

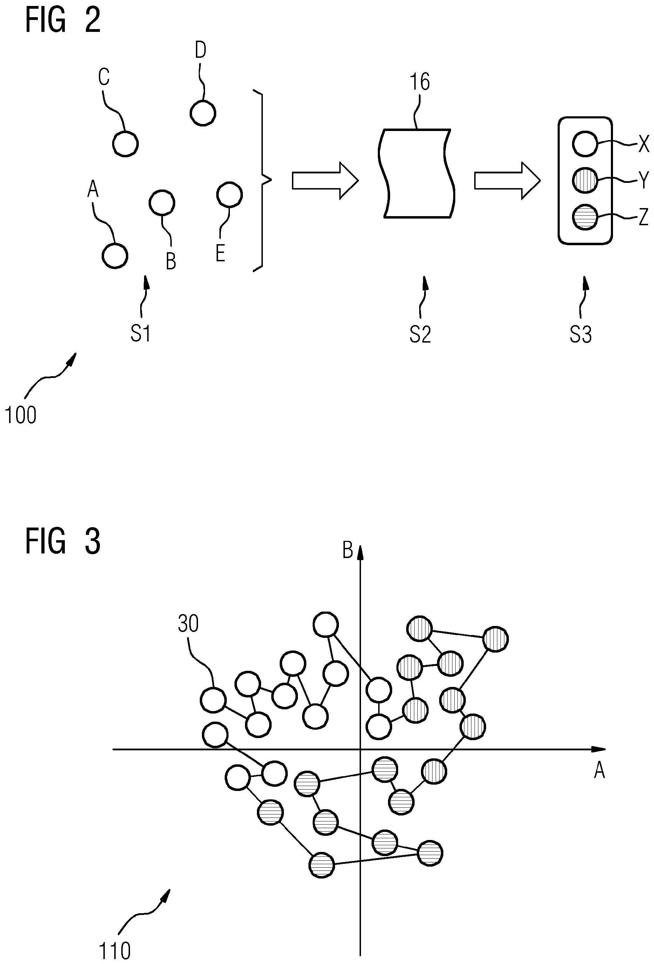

FIG 2 zeigt ein Beispiel eines Verfahrens 100 zur Charakterisierung eines Verhüttungsprozesses. Hierbei werden in einem Verfahrensschritt S1 für einen in einem Hochofen gegenwärtig ablaufenden Verhüttungsprozess Parameterwerte A, B, C, D, E einer vorbestimmten Anzahl verschiedener Prozessparameter ermittelt. Vorliegend werden rein beispielhaft fünf Prozessparameter betrachtet. Die Parameterwerte A bis E der fünf Prozessparameter sind zweckmäßigerweise charakteristisch für den aktuellen Hochofen-Betriebszustand. Sie können beispielsweise eine Durchgasung des Hochofens, eine Kühlleistung am Hochofen, einen Druckabfall im Hochofen, eine Kohlenmonoxid-Ausnutzung im Hochofen und einen Reduktionsmittelverbrauch abbilden. Die Parameterwerte A bis E können beispielsweise mittels einer Sensorvorrichtung sensorisch erfasst und/oder abgerufen werden.

In einem weiteren Verfahrensschritt S2 ordnet ein maschinell erlerntes Modell 16 auf Grundlage der ermittelten Parameterwerte A bis E einen durch die Parameterwerte A bis E definierten Hochofen-Betriebszustand einer Betriebskategorie X, Y, Z zu. Insbesondere wird der durch die Parameterwerte A bis E charakterisierte Hochofen-Betriebszustand in eine leicht zu interpretierende Kennzahl komprimiert. Das maschinell erlernte Modell 16 kann insofern die mehrjährige Erfahrung einer Mehrzahl an Bedienpersonen bzw. das entsprechende Expertenwissen repräsentieren.

Eine der Betriebskategorien, die Betriebskategorie X, kann beispielsweise "gute", d. h. gewünschte, Betriebszustände des Hochofens repräsentieren, in denen der Verhüttungsprozess effizient und im Wesentlichen störungsfrei abläuft. Hochofen-Betriebszustände der Betriebskategorie X erfordern zum Betrieb des Hochofens entsprechend einen verhältnismäßig geringen Einsatz an Ressourcen wie Energie, Reduktionsmittel, gegebenenfalls Zuschlagsstoffen und/oder dergleichen. Die Betriebskategorie X ist in FIG 2 durch die Abwesenheit einer Schraffur gekennzeichnet.

Eine andere der Betriebskategorien, die Betriebskategorie Y, kann "neutrale", d. h. zwar tolerierbare, aber nicht optimale Betriebszustände des Hochofens repräsentieren. In den Hochofen-Betriebszuständen der Betriebskategorie Y kann der Verhüttungsprozess vergleichsweise weniger effizient und unter Umständen mit kleineren Störungen ablaufen. Es können hierbei zeitweise erhöhter Ressourcenverbrauch und/oder ein Ausfall bzw. Defekt einzelner Sensoren der Sensorvorrichtung zum Ermitteln der Parameterwerte A bis E auftreten. Die Betriebskategorie Y ist in FIG 2 durch die eine vertikale Schraffur gekennzeichnet.

Eine weitere der Betriebskategorien, die Betriebskategorie Z, kann "schlechte", d. h. ungewünschte, Betriebszustände des Hochofen repräsentieren, in denen der Verhüttungsprozess ineffizient abläuft und/oder dauerhaft gestört ist. Hochofen-Betriebszustände der Betriebskategorie Z erfordern entsprechend einen verhältnismäßig hohen Einsatz an Ressourcen zum Hochofenbetrieb und/oder umfassen problematische oder sogar kritische Prozessentwicklungen und -folgen wie etwa eine Ansatzbildung auf den Schachtwänden oder ein Hängen des Möllers. Die Betriebskategorie Z ist in FIG 2 durch eine horizontale Schraffur gekennzeichnet.

In einem weiteren, bevorzugten Verfahrensschritt S3 wird die dem aktuellen Hochofen-Betriebszustand zugeordnete Betriebskategorie X bis Z ausgegeben, zum Beispiel über eine Schnittstelle wie eine Anzeige oder zumindest einen Datenbus. Denkbar ist etwa die Ausgabe als eine Art "Zustandsampel", wodurch der Hochofen-Betriebszustand vom Bedienpersonal auch ohne aufwändige und zeitintensive manuelle Auswertung einer Vielzahl an Betriebsparametern bzw. ohne größere prozesstechnische Erfahrung zuverlässig erkannt werden kann.

Gegebenenfalls kann in Verfahrensschritt S3 nicht nur die Betriebskategorie X bis Z, sondern auch eine Zustandsprognose oder zumindest ein Trend, wie sich der Hochofen-Betriebszustand entwickelt, ausgegeben werden. Diese Zustandsprognose bzw. der Trend lässt sich auf eine von verschiedenen Arten visualisieren, zum Beispiel als 2-D-Plot, insbesondere als Projektion ausgewählter Prozessparameter in eine zweidimensionale Darstellung, oder einen Verlauf über eine vorbestimmte Zeitspanne, etwa einen Zeitverlauf der letzten Woche. Eine mögliche visuelle Repräsentation ist in FIG 3 gezeigt.

FIG 3 zeigt ein Beispiel einer Trajektorie 110 eines Hochofen-Betriebszustands 30. Der Hochofen-Betriebszustand 30 kann grundsätzlich durch die Parameterwerte einer vorbestimmten Anzahl an Prozessparametern definiert sein. Zur Darstellung der Trajektorie 110 in FIG 3 sind dem Hochofen-Betriebszustand 30 zu verschiedenen Zeitpunkten zugeordnete Betriebskategorien, die durch unterschiedliche Schraffur gekennzeichnet sind, gegen zwei dieser Prozessparameter mit den Parameterwerten A, B aufgetragen. Zeitlich aufeinanderfolgende Zeitpunkte sind durch Linien miteinander verbunden. Aus Gründen der Übersichtlichkeit ist der Hochofen-Betriebszustand 30 nur zum Startzeitpunkt mit einem Bezugszeichen versehen.

FIG 3 ist zu entnehmen, dass sich der Hochofen, in dem der Verhüttungsprozess abläuft, zunächst in einem "guten" Zustand befindet. Dieser Hochofen-Betriebszustand 30 ist in FIG 3 durch die Abwesenheit einer Schraffur gekennzeichnet.

Mit fortschreitender Zeit wächst der auf der Abszisse aufgetragene Prozessparameter an, d. h. der entsprechende Parameterwert A erhöht sich. Der Hochofen geht dabei in einen "neutralen" Zustand, der in FIG 3 durch eine vertikale Schraffur gekennzeichnet ist, über.

Schließlich schrumpfen beide Prozessparameter, d. h. die entsprechenden Parameterwerte A, B verringern sich, und der Hochofen geht in einen "schlechten" Zustand über. Dieser Hochofen-Betriebszustand 30 ist in FIG 3 durch eine horizontale Schraffur gekennzeichnet. Gegen Ende der Trajektorie 110 wächst der Parameterwert B wieder, und der "gute" Betriebszustand wird wiederhergestellt.

Eine derartige Trajektorie 110 lässt sich ermitteln und, wie beispielhaft in FIG 3 gezeigt, visualisieren, indem mittels des im Zusammenhang mit FIG 2 beschriebenen Verfahrens auf Grundlage der zu mehreren, aufeinanderfolgenden Zeitpunkten ermittelten Parameterwerte der Hochofen-Betriebszustand 30 durch ein entsprechend maschinell erlerntes Modell einer der Betriebskategorien zugeordnet wird.

Vorteilhaft werden dabei nicht nur zwei Prozessparameter betrachtet, sondern mehrere, z. B. eine Durchgasung des Hochofens, etwa ein Verhältnis von Differenzdrücken über unterschiedliche Hochofenbereiche, ein Kühlleistung des Hochofens, eine Kohlenmonoxid-Ausnutzung und/oder ein Reduktionsmittelverbrauch. Insofern kann die Trajektorie auch mehrdimensional sein, d. h. in mehr als zwei Dimensionen verlaufen. Zur Visualisierung kann eine derartige mehrdimensionale Trajektorie des Hochofenzustands in eine Ebene, insbesondere auf Hauptkomponenten, projiziert und infolgedessen als zweidimensionaler Plot dargestellt werden. So lässt sich ein ganzheitlicher Überblick über den Betriebszustand schaffen.

Grundsätzlich ist es auch denkbar, in einem solchen Plot, also z. B. auch in der in FIG 3 gezeigten Trajektorie 110, zusätzlich "historische" Betriebsdaten des Hochofens, d. h. ältere Paare und/oder Projektionen von Parameterwerten A, B, darzustellen. Diese Betriebsdaten können z. B. transparent im Hintergrund der Trajektorie 110 abgebildet sein, um einen Vergleich mit Betriebszuständen aus der Vergangenheit zu ermöglichen.

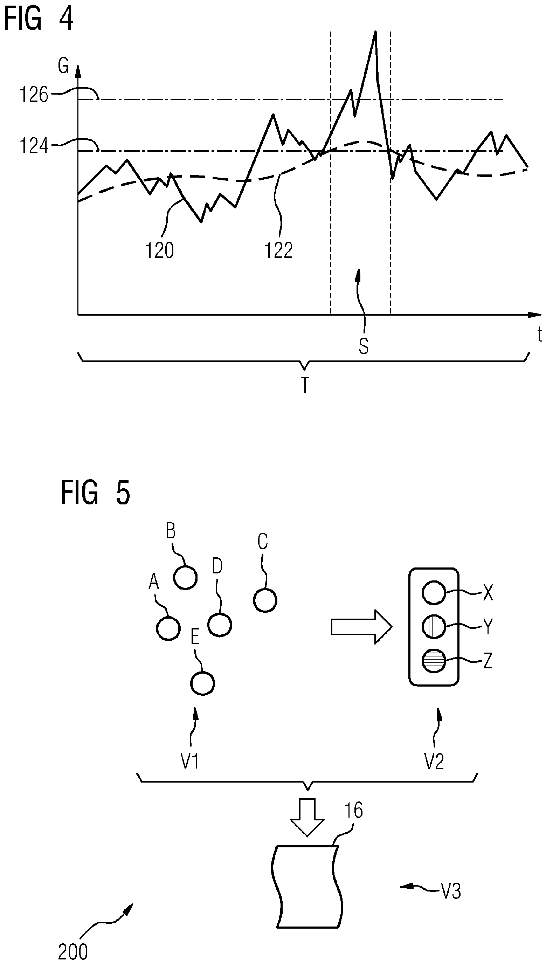

FIG 4 zeigt ein Beispiel eines zeitlichen Verlaufs 120 eines bei der Abschätzung von aktuellen Parameterwerten, zum Beispiel mittels weiterer maschinell erlernter Modelle, ermittelten Gesamtfehlers G. Dazu ist der Gesamtfehler G in einem Prozessabschnitt T, d.h. innerhalb eines bestimmten Zeitbereichs, gegen die Zeit t aufgetragen.

Ein derartiger Gesamtfehler G lässt sich beispielsweise ermitteln, indem für eine vorbestimmte Anzahl an Prozessparametern zu einem Zeitpunkt jeweils ein Parameterwert ermittelt wird, während in einem Hochofen ein Verhüttungsprozess abläuft. Für jeden der Prozessparameter kann dann, auf Grundlage der Parameterwerte der übrigen Prozessparameter, mittels des spezifisch für diesen Prozessparameter weiteren maschinell erlernten Modells, der Parameterwert zusätzlich geschätzt werden. Das weitere maschinell erlernte Modell gibt dabei zweckmäßigerweise einen Fehler aus, zum Beispiel als Differenz zwischen dem geschätzten Parameterwert und dem tatsächlich ermittelten, zum Beispiel gemessenen, Parameterwert. Mittels der entsprechenden weiteren maschinell erlernten Modelle kann dies für jeden Prozessparameter durchgeführt werden, sodass für jeden Prozessparameter ein Fehler ermittelt wird. Der Gesamtfehler G kann dann auf Grundlage der für jeden Prozessparameter ermittelten Fehler berechnet werden, zum Beispiel durch Mittelung, gewichtete Mittelung und/oder ein anderes geeignetes statistisches Verfahren. Wird dies für mehrere aufeinanderfolgende Zeitpunkte durchgeführt, ergibt sich ein zeitlicher Verlauf 120 des Gesamtfehlers G.

Aufgrund der starken Fluktuation des ermittelten Gesamtfehlers G kann erwogen werden, eine Glättung vorzunehmen. Dazu kann ein geeignetes Glättungsverfahren, zum Beispiel eine Ausgleichsrechnung oder eine Regressionsanalyse, angewendet werden. Das Ergebnis einer solchen Glättung, der geglättete Gesamtfehler 122, ist als gestrichelte Linie in FIG 4 eingezeichnet.

Grundsätzlich kann anhand des Gesamtfehlers G, insbesondere des zeitlichen Verlaufs 120, geprüft werden, ob eine Störung S des Hochofen-Betriebszustands vorliegt. Beispielsweise lässt sich prüfen, ob der geglättete Gesamtfehler 122 einen ersten vorgegebenen Schwellenwert 124, der auch als "average limit" bezeichnet werden kann und in FIG 4 als horizontale, strichpunktierte Linie eingezeichnet ist, erreicht oder überschreitet. In FIG 4 ist dies in dem durch die gepunkteten vertikalen Linien gekennzeichneten Zeitraum der Fall. Eine solche, über einen längeren Zeitraum vorliegende Störung S kann auf einen auch als "drift" bezeichneten Zustandswechsel hindeuten, wie er beispielsweise durch Ansatzbildung an der Schachtwandung oder Hängen des Möllers im Schacht verursacht wird.

Alternativ oder zusätzlich lässt sich auch prüfen, ob der Gesamtfehler G einen zweiten vorgegebenen Schwellenwert 126, der auch als "spike limit" bezeichnet werden kann und in FIG 4 ebenfalls als horizontale, strichpunktierte Linie eingezeichnet ist, erreicht oder überschreitet. In FIG 4 ist dies für einen kurzen Zeitabschnitt der Fall. Eine solche kurze Störung S wird auch als spontane Zustandsänderung oder Punktanomalie bezeichnet und kann zum Beispiel durch einen Defekt eines Messinstruments oder durch Stürzen des Möllers nach einem Hängen ausgelöst werden.

Gegebenenfalls lässt sich die Ursache für die Störung S genauer bestimmen, indem auch der zeitliche Verlauf 120 der einzelnen, für jeden Prozessparameter ermittelten Fehler und/oder der zeitliche Verlauf 120 der entsprechenden Parameterwerte, d. h. die zeitliche Entwicklung dieser Fehler oder Werte, betrachtet wird. Insbesondere kann, ebenso wie für den Gesamtfehler G, für jeden einzelnen der für jeden Prozessparameter ermittelten Fehler geprüft werden, ob ein erster vorgegebener Schwellenwert 124 und/oder ein zweiter vorgegebener Schwellenwert 126 erreicht oder überschritten wird und gegebenenfalls auch, ob dies mit der anhand des Gesamtfehlers G identifizierten Störung S zeitlich korreliert. So lässt sich gegebenenfalls ableiten, welche der Prozessparameter an der Störung S beteiligt oder sogar ursächlich dafür sind.

FIG 5 zeigt ein Beispiel eines Verfahrens 200 zum maschinellen Erlernen eines Modells 16, welches einen durch ermittelte Parameterwerte A, B, C, D, E einer vorbestimmten Anzahl an Prozessparametern definierten Hochofen-Betriebszustand einer Betriebskategorie X, Y, Z zuordnet. Die Betriebskategorien X bis Z sind wie in FIG 2 durch Schraffur gekennzeichnet.

In einem Verfahrensschritt V1 werden die Parameterwerte A bis E, die bei einem in einem Hochofen ablaufenden Verhüttungsprozess über einen vorbestimmte Zeitraum ermittelt wurden, bereitgestellt. Das Bereitstellen kann das Ermitteln, zum Beispiel das sensorische Erfassen oder Abrufen dieser Werte, umfassen. Beispielsweise kann in Verfahrensschritt V1 eine Datenbank, in der die Parameterwerte A bis E über einen Zeitraum von mehreren, zum Beispiel bis zu drei, Jahren abgelegt sind, ausgelesen werden.

In einem weiteren Verfahrensschritt V2 werden jeweils durch einen Satz an Parameterwerten A bis E definierte Hochofen-Betriebszustände zu verschiedenen Zeitpunkten innerhalb des vorbestimmten Zeitraums einer der Betriebskategorien X bis Z zugeordnet. Diese Zuordnung kann beispielsweise manuell durch erfahrenes Bedienpersonal erfolgen. Der Zuordnung liegt folglich Expertenwissen zugrunde. Durch die Zuordnung entsteht ein neuer Datensatz, der als Trainingsdatensatz in einem weiteren Verfahrensschritt V3 verwendet werden kann.

Im weiteren Verfahrensschritt V3 wird mittels eines Algorithmus auf Grundlage der die Hochofen-Betriebszustände definierenden Parameterwerte A bis E und der jeweils zugeordneten Betriebskategorien X bis Z das Modell 16 maschinell erlernt. Anders gesagt wird das Modell 16 auf Grundlage des im Verfahrensschritt V2 erzeugten Trainingsdatensatzes trainiert, sodass es einem durch neue aktuellen Parameterwerte A bis E definierten Hochofen-Betriebszustand automatisch eine der Betriebskategorien X bis Z zuordnen kann.

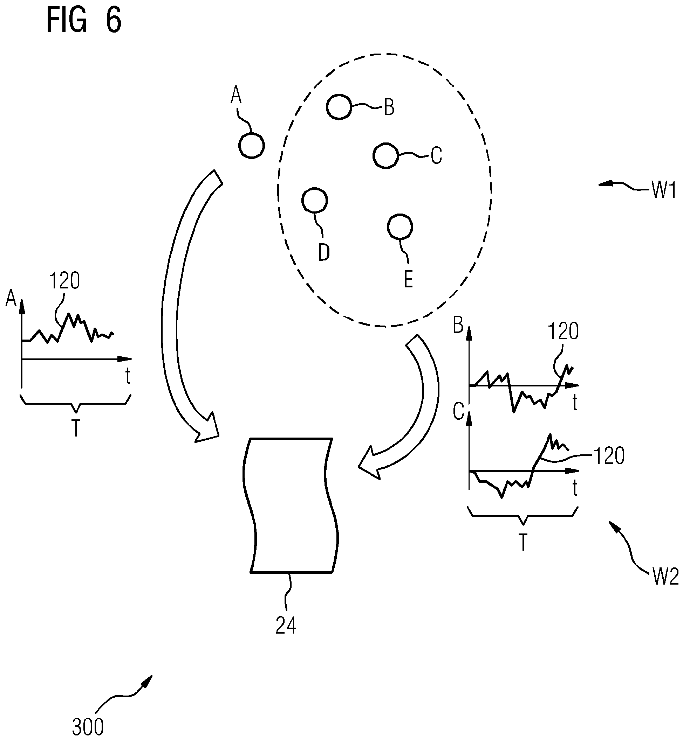

FIG 6 zeigt ein Beispiel eines Verfahrens 300 zum maschinellen Erlernen eines weiteren Modells 24, welches einen aktuellen Parameterwert A eines Prozessparameters aus einer vorbestimmten Anzahl an Prozessparametern schätzt auf Grundlage aktueller Parameterwerte B, C, D, E weiterer Prozessparameter.

In einem Verfahrensschritt W1 werden die Parameterwerte A bis E der vorbestimmten Anzahl verschiedener Prozessparameter bereitgestellt, die bei einem in einem Hochofen ablaufenden Verhüttungsprozess über einen vorbestimmten Zeitraum ermittelt wurden. Das Bereitstellen kann das Ermitteln, zum Beispiel das sensorische Erfassen oder Abrufen dieser Werte, umfassen. Beispielsweise kann in Verfahrensschritt W1 eine Datenbank, in der die Parameterwerte A bis E über einen Zeitraum von mehreren, zum Beispiel bis zu drei, Jahren abgelegt sind, ausgelesen werden.

In einem weiteren Verfahrensschritt W2 wird mittels eines Algorithmus auf Grundlage von Parameterwerten A bis E der Prozessparameter aus mehreren vorbestimmten Prozessabschnitten T innerhalb des vorbestimmten Zeitraums das weitere Modell 24 maschinell erlernt. Beispielsweise kann das weitere Modell 24 unter der Maßgabe trainiert werden, dass auf Grundlage der Parameterwerte B bis E der Parameterwert A geschätzt wird. Dabei kann, insbesondere für jeden der vorbestimmten Prozessabschnitte T, auch der zeitliche Verlauf 120 des Parameterwerts A und der korrespondierenden Parameterwerte B bis E berücksichtigt werden, d. h. dem Erlernen der Schätzung des Parameterwerts A zugrunde gelegt werden. Diese zeitlichen Verläufe 120 sind in FIG 6 für die Parameterwerte A bis C während eines Prozessabschnitts T durch Auftragen der Parameterwerte A bis C gegen die Zeit t dargestellt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlage
- 2: Einsatzstoff
- 3: Hochofen
- 4: Schacht
- 5: Schüttung

- 10: System
- 12: Sensorvorrichtung
- 14: Kategorisierungsvorrichtung
- 16: Modell
- 18: Sensor
- 20: Anlagensteuerung
- 22: Ausgabeschnittstelle
- 24: weiteres Modell

- 30: Hochofen-Betriebszustand

- 100: Verfahren zur Charakterisierung eines Verhüttungsprozesses
- S1: Ermitteln von Parameterwerten
- S2: Zuordnen einer Betriebskategorie
- S3: Ausgeben der zugeordneten Betriebskategorie

- 200: Verfahren zum maschinellen Erlernen eines Modells
- V1: Bereitstellen von Parameterwerten
- V2: Zuordnen von Betriebskategorien
- V3: Erlernen des Modells

- 300: Verfahren zum maschinellen Erlernen eines weiteren Modells
- W1: Bereitstellen von Parameterwerten
- W2: Erlernen des weiteren Modells

- 110: Trajektorie
- 120: zeitlicher Verlauf
- 122: geglätteter Gesamtfehler
- 124: erster Schwellenwert
- 126: zweiter Schwellenwert

- A, B, C, D, E: Parameterwert
- X, Y, Z: Betriebskategorie
- G: Gesamtfehler
- t: Zeit
- S: Störung
- T: Prozessabschnitt

## Patentansprüche

1. Verfahren (100) zur Charakterisierung eines Verhüttungsprozesses in einem Hochofen (3), wobei
- für einen in einem Hochofen (3) gegenwärtig ablaufenden Verhüttungsprozess Parameterwerte (A, B, C, D, E) einer vorbestimmten Anzahl verschiedener Prozessparameter ermittelt werden (S1), wobei zumindest einer der Prozessparameter eine Durchgasung des Hochofens (3) abbildet, und
- ein maschinell erlerntes Modell (16) auf Grundlage der ermittelten Parameterwerte (A, B, C, D, E) einen durch die Parameterwerte (A, B, C, D, E) definierten Hochofen-Betriebszustand (30) einer Betriebskategorie (X, Y, Z) zuordnet (S2).

2. Verfahren (100) nach Anspruch 1, wobei die Parameterwerte (A, B, C, D, E) von zehn oder weniger, vorzugsweise von fünf oder weniger, insbesondere vier, Prozessparametern ermittelt und der Zuordnung des Hochofen-Betriebszustands (30) zu einer Betriebskategorie (X, Y, Z) zugrunde gelegt werden.

3. Verfahren (100) nach Anspruch 1 oder 2, wobei neben einem Parameterwert (A, B, C, D, E), der eine Durchgasung des Hochofens (3) abbildet, jeweils ein Parameterwert (A, B, C, D, E) für eine Kühlleistung am Hochofen (3), ein Parameterwert, der einen Druckabfall im Hochofen (3) abbildet, ein Parameterwert, der ein Kohlenmonoxid-Ausnutzung abbildet, und/oder ein Parameterwert für einen Reduktionsmittelverbrauch ermittelt und der Zuordnung des Hochofen-Betriebszustands (30) zu einer Betriebskategorie (X, Y, Z) zugrunde gelegt wird.

4. Verfahren (100) nach einem der vorangehenden Ansprüche, wobei
- mittels wenigstens eines weiteren maschinell erlernten Modells (24) der aktuelle Parameterwert (A) wenigstens einer der Prozessparameter geschätzt wird auf Grundlage aktueller Parameterwerte (B, C, D, E) der übrigen Prozessparameter und
- auf Grundlage eines vom wenigstens einen weiteren maschinell erlernten Modell (24) für diese Schätzung ausgegebenen Fehlers geprüft wird, ob eine Störung (S) des durch die aktuellen Parameterwerte (A, B, C, D, E) definierten Hochofen-Betriebszustands (30) vorliegt.

5. Verfahren (100) nach einem der vorangehenden Ansprüche, wobei
- mittels weiterer maschinell erlernter Modelle (24) die aktuellen Parameterwerte (A, B, C, D, E) für jeden Prozessparameter geschätzt werden auf Grundlage aktueller Parameterwerte (A, B, C, D, E) der jeweils übrigen Prozessparameter und
- auf Grundlage von Fehlern, die von den weiteren maschinell erlernten Modellen (24) für diese Schätzungen ausgegeben werden, ein Gesamtfehler (G) ermittelt wird, der einer Prüfung, ob eine Störung (S) des von dem durch die Parameterwerte (A, B, C, D, E) der Prozessparameter definierten Hochofen-Betriebszustands (30) vorliegt, zugrunde gelegt wird.

6. Verfahren (100) nach Anspruch 5, wobei auf Grundlage der für die Schätzungen ermittelten Fehler und/oder des Gesamtfehlers (G) eine Ursache für die Störung (S) von dem durch die Parameterwerte (A, B, C, D, E) der Prozessparameter definierten Hochofen-Betriebszustand (30) ermittelt wird.

7. Verfahren (100) nach einem der vorangehenden Ansprüche, wobei auf Grundlage eines zeitlichen Verlaufs (120) der Parameterwerte (A, B, C, D, E) zumindest eines der Prozessparameter und eines parallelen zeitlichen Verlaufs (120) der zugeordneten Betriebskategorien (X, Y, Z) eine weitere Entwicklung des Hochofen-Betriebszustands (30) abgeschätzt wird.

8. System (10) zur Charakterisierung eines Verhüttungsprozesses in einem Hochofen (3), aufweisend
- eine Sensorvorrichtung (12) für einen Hochofen (3), mit der bei einem im Hochofen (3) ablaufenden Verhüttungsprozess aktuelle Parameterwerte (A, B, C, D, E) einer vorbestimmten Anzahl verschiedener Prozessparameter ermittelbar sind, wobei zumindest einer der Prozessparameter eine Durchgasung des Hochofens (3) abbildet, und
- eine Kategorisierungsvorrichtung (14), die ein maschinell erlerntes Modell (16) aufweist und dazu eingerichtet ist, auf Grundlage der ermittelten Parameterwerte (A, B, C, D, E) einen durch die Parameterwerte (A, B, C, D, E) der Prozessparameter definierten Hochofen-Betriebszustand (30) einer Betriebskategorie (X, Y, Z) zuzuordnen.

9. Anlage (1) zur Verhüttung eines Einsatzstoffs (2), insbesondere eines Metallerzes, mit einem Hochofen (3) und einem System (10) zur Charakterisierung eines Verhüttungsprozesses gemäß Anspruch 8, wobei die Sensorvorrichtung (12) des Systems (10) im Bereich des Hochofens (3) angeordnet ist.

10. Verfahren (200) zum maschinellen Erlernen eines Modells (16), welches in einem Verfahren (100) gemäß einem der Ansprüche 1 bis 7 einsetzbar ist, wobei
- Parameterwerte (A, B, C, D, E) einer vorbestimmten Anzahl verschiedener Prozessparameter bereitgestellt werden (V1), die bei einem in einem Hochofen (3) ablaufenden Verhüttungsprozess über einen vorbestimmten Zeitraum ermittelt wurden, wobei zumindest einer der Prozessparameter eine Durchgasung des Hochofens (3) abbildet,
- jeweils durch einen Satz an Parameterwerten (A, B, C, D, E) der Prozessparameter definierte Hochofen-Betriebszustände (30) zu verschiedenen Zeitpunkten innerhalb des vorbestimmten Zeitraums einer Betriebskategorie (X, Y, Z) zugeordnet werden (V2) und
- mittels eines Algorithmus auf Grundlage der die Hochofen-Betriebszustände (30) definierenden Parameterwerte (A, B, C, D, E) und der jeweils zugeordneten Betriebskategorien (X, Y, Z) ein Modell (16) maschinell erlernt wird.

11. Verfahren (300) zum maschinellen Erlernen eines weiteren Modells (24), welches in einem Verfahren (100) gemäß einem der Ansprüche 4 bis 6 einsetzbar ist, wobei
- Parameterwerte (A, B, C, D, E) einer vorbestimmten Anzahl verschiedener Prozessparameter bereitgestellt werden (W1), die bei einem in einem Hochofen (3) ablaufenden Verhüttungsprozess über einen vorbestimmten Zeitraum ermittelt wurden, wobei zumindest einer der Prozessparameter eine Durchgasung des Hochofens (3) abbildet, und
- mittels eines Algorithmus auf Grundlage von Parameterwerten (A, B, C, D, E) der Prozessparameter aus mehreren vorstimmten Prozessabschnitten (T) ein weiteres Modell (24) maschinell erlernt wird (W2), mit dem zumindest für einen Prozessparameter ein aktueller Parameterwert (A) schätzbar ist auf Grundlage der aktuellen Parameterwerte (B, C, D, E) der übrigen Prozessparameter.
